# EUROPEAN PATENT APPLICATION

(11) **EP 1 501 217 A2**
(43) Date of publication of application: **26.01.2005**
(21) Application number: 04025837.8
(22) Date of filing: 08.03.1999
(51) Int. Cl.: H04B 7/26, H04B 7/005

(54) **A radio communication system with transmission power control**

(30) Priority: 10.03.1998 JP 7831598
(62) Divisional of application: 99939239.2
(71) Applicant: MATSUSHITA ELECTRIC INDUSTRIAL CO., LTD., Kadoma-shi, Osaka 571-8501 (JP)
(72) Inventor: Uesugi, Mitsuru, Yokosuka-shi, Kanagawa 238-0048 (JP); Kato, Osamu, Yokosuka-shi, Kanagawa 237-0066 (JP)
(74) Representative: Grünecker, Kinkeldey, Stockmair & Schwanhäusser Anwaltssozietät

(57) **Abstract**

The base station apparatus extracts a transmission power control signal mixed into an uplink reception signal and performs first transmission power control by amplifiers 116 and 127. At the same time, the base station apparatus estimates the reception quality of the uplink reception signal by SIR maesurers 122 and 133, and performs second transmission power control by adjusting the offset values of amplifiers 116 and 127 by offset adjusters 135 and 136 according to the estimation result. The second transmission power control is performed so as to reduce the transmission power when the base station is far from the mobile station and increase the transmission power when the base station is near the mobile station.

## Description

### Technical Field

The present invention relates to a base station apparatus and a transmission power control method to carry out CDMA communications. To be more specific, the present invention relates to a CDMA base station apparatus and a transmission power control method that optimally control the transmission power of the base station before and after a move when a soft handover takes place.

### Background Art

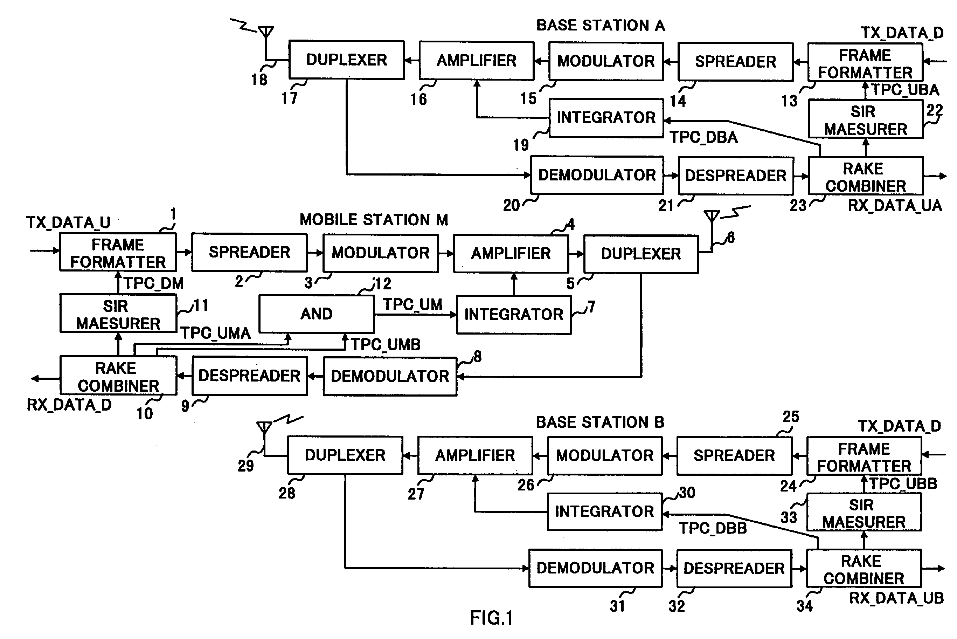

A conventional CDMA base station apparatus carrying out handover control has a configuration shown below. FIG.1 are block diagrams showing an outline of conventional mobile station apparatus M, base station apparatus A and base station apparatus B.

Mobile station apparatus M comprises mobile station frame formatter 1, spreader 2, modulator 3, amplifier 4, duplexer 5, antenna 6, integrator 7, demodulator 8, despreader 9, RAKE combiner 10, SIR measurer 11 and AND operator 12.

On the other hand, base station apparatus A comprises frame formatter 13, spreader 14, modulator 15, amplifier 16, duplexer 17, antenna 18, integrator 19, demodulator 20, despreader 21, SIR measurer 22 and RAKE combiner 23.

Likewise, base station apparatus B comprises frame formatter 24, spreader 25, modulator 26, amplifier 27, duplexer 28, antenna 29, integrator 30, demodulator 31, despreader 32, SIR maesurer 33 and RAKE combiner 34.

The mobiles station apparatus and base station apparatuses configured as shown above carry out a handover as shown in FIG.2 to FIG. 5. FIG.2 is a schematic diagram showing how a handover takes place, FIG.3 shows the reception power of the mobile station apparatus without transmission power control, FIG.4 shows the transmission power of the base station apparatuses with transmission power control and FIG. 5 shows the reception power of the mobile station apparatus carrying out transmission power control using conventional transmission/reception apparatuses.

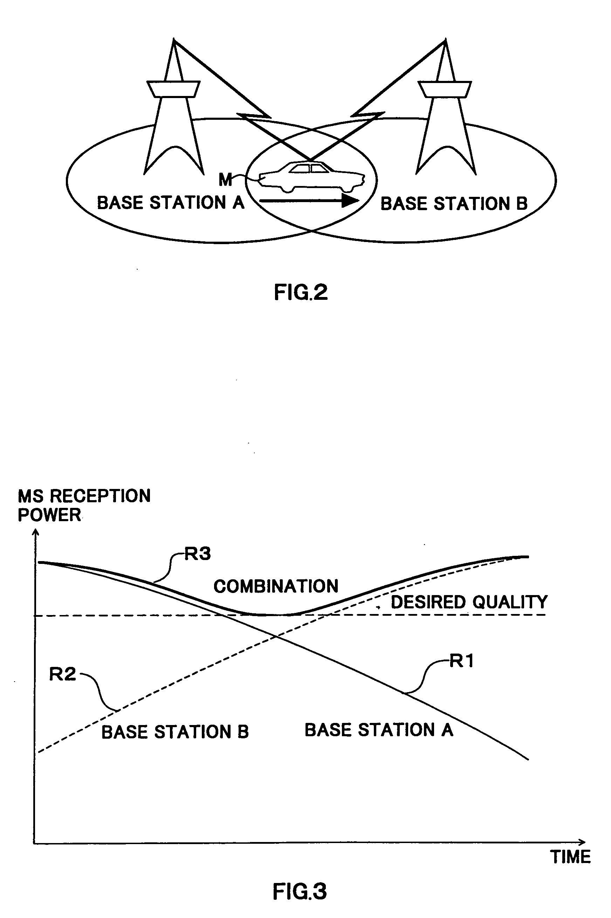

As shown in FIG. 2, handover control is required when mobile station apparatus M moves from the area of base station A within the reach of radio waves of base station apparatus A to the area of base station apparatus B within the reach of radio waves of base station apparatus B. At this time, mobile station apparatus M must switch a communication with base station apparatus A to one with base station apparatus B. In this case, CDMA communications, etc. allow the mobile station apparatus to use a same frequency in neighboring areas, making a so-called soft handover possible, which is a way of realizing a seamless handover in a soft manner.

When carrying out a handover, mobile station M receives reception power R1 with which the mobile station receives a signal transmitted from base station apparatus A without transmission power control and reception power R2 with which the mobile station receives another signal transmitted from base station apparatus B without transmission power control, and combines both R1 and R2. FIG. 3 shows how this combination takes place.

As shown in FIG.3, mobile station apparatus M combines reception power R1 and reception power R2 into reception power R3. Through such a combination of reception signals, mobile station apparatus M can receive a signal with combined reception power R3 with a quality exceeding the required level even on the cell boundary (central part of FIG. 3) distant from both base station apparatuses.

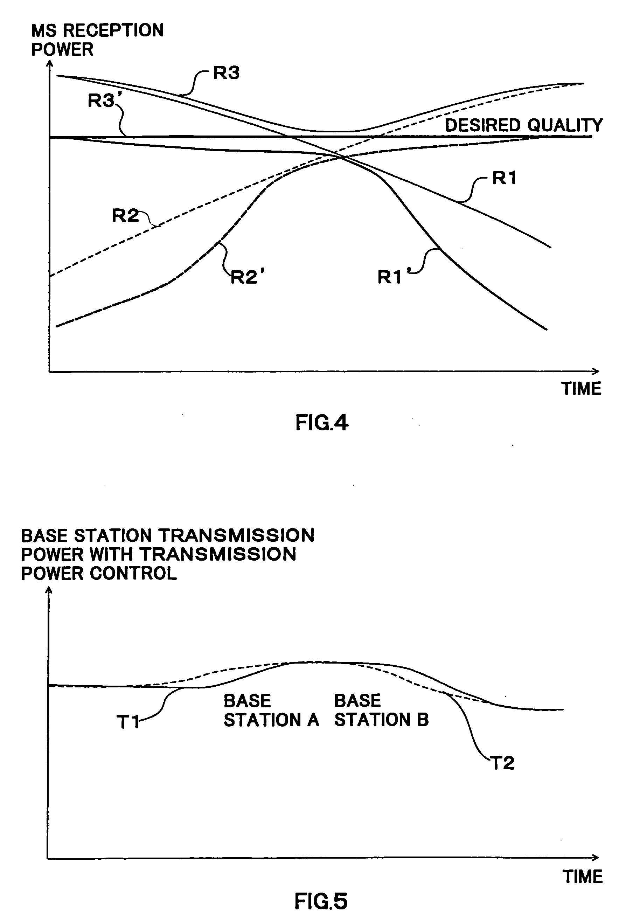

However, the two base station apparatuses above do not carry out downlink transmission power control. This causes combined reception power R3 of mobile station apparatus M to have an excessive quality exceeding the desired quality when mobile station apparatus M is near either base station apparatus A or base station apparatus B as shown in FIG.4.

The right and left ends of combined reception power R3 in FIG. 4 show this situation. Thus, if the reception levels at the start and end of a handover have an excessive quality, signals transmitted from the base station apparatuses to the mobile station apparatus may not only cause interference with communications of other users but also suppress the system capacity.

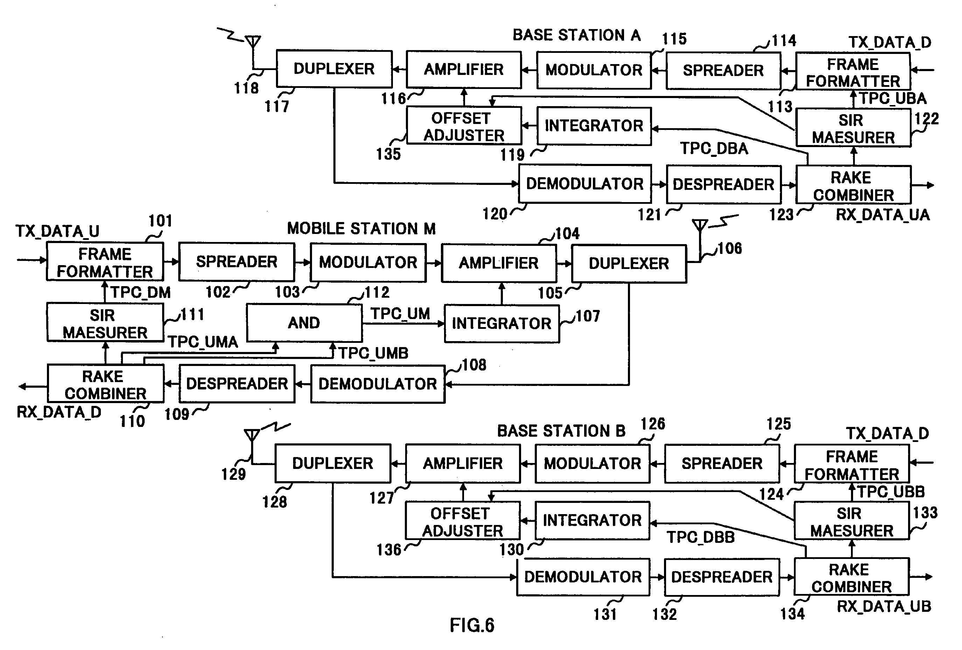

For this reason, the base station apparatuses need to perform downlink transmission power control. That is, mobile station apparatus M sends transmission power control signals to base station apparatus A and base station apparatus B. Based on the transmitted base station control signals, base station apparatus A controls transmission power T1 and base station apparatus B controls transmission power T2. That is, transmission power T1 of base station apparatus A is controlled to be lower near base station apparatus A and transmission power T2 of base station apparatus B is controlled to be lower near base station apparatus B. FIG.5 shows this situation.

By carrying out such transmission power control, reception power R1' at mobile station apparatus M of a signal transmitted by base station apparatus A and reception power R2' at mobile station apparatus M of another signal transmitted by base station apparatus B together constitute reception power R3' shown in FIG.4. Thus, by combining signals received from two base station apparatuses, combined reception power R3' at the mobile station apparatus matches the desired quality, making it possible to suppress excessive transmission power from the base stations and improve the system capacity.

A conventional CDMA transmission system carrying out downlink transmission power control when mobile station apparatus M carries out a soft handover from the area of base station apparatus A to the area of base station apparatus B is explained in detail with reference to FIG.1.

Mobile station apparatus M sends TX_DATA_U1, an uplink transmission signal, to the base station apparatuses. Mobile station apparatus M carries out error correction coding on transmission signal TX_DATA_U1 by frame formatter 1. At the same time, mobile station apparatus M inserts a pilot symbol and transmission power control signal TPC_DM for a downlink signal determined based on the result of SIR maesurer 11 that estimates the quality of the downlink signal. Further, mobile station apparatus M spreads the output of frame formatter 1 by spreader 2, modulates by modulator 3, amplifies by amplifier 4, and then sends it from antenna 6 via duplexer 5. At this time, the amplification factor of amplifier 4 is controlled by the output of integrator 7.

On the other hand, base station apparatus A inputs the signal received from antenna 18 via duplexer 17, demodulates by demodulator 20, processes by despreader 21 and RAKE combiner 23 and obtains reception signal RX_DATA_UA. Then, base station apparatus A estimates the reception quality of the uplink signal by SIR maesurer 22 using the result of RAKE combiner 23 and determines the transmission power control level of the uplink signal based on this estimated value TPC_UBA. Frame formatter 13 inserts a pilot signal and uplink signal transmission power control bit TPC_UBA into downlink signal TX_DATA_D subjected to error correction coding.

Base station apparatus A spreads this signal by spreader 14, modulates by modulator 15, amplifies by amplifier 16 and transmits it from antenna 18 via duplexer 17. The amplification factor then is determined by a value obtained by integrator 19 integrating downlink transmission power control signal TPC_DBA which was extracted by RAKE combiner 23. By the way, downlink transmission power control signal TPC_DBA used at this time is the demodulated TPC_DM that was inserted into the uplink signal by the mobile station. This is how base station apparatus A performs downlink transmission power control.

Likewise, base station apparatus B inputs the signal received from antenna 29 via duplexer 28, demodulates by demodulator 31, processes by despreader 32 and RAKE combiner 34 and obtains reception signal RX_DATA_UB. At this time, base station apparatus B estimates the reception quality of the uplink signal by SIR maesurer 33 using the result of RAKE combiner 34 and determines the transmission power control level of the unlink signal based on this estimated value TPC_UBB. Frame formatter 24 inserts a pilot signal and uplink signal transmission power control bit TPC_UBB into downlink signal TX_DATA_D subjected to error correction coding. TX_DATA_D is the same as TX_DATA_D of base station A.

Base station apparatus B spreads this signal by spreader 25, modulates by modulator 26, amplifies by amplifier 27 and transmits it from antenna 29 via duplexer 28. The amplification factor then is determined by a value obtained by integrator 30 integrating downlink transmission power control signal TPC_DBB which was extracted by RAKE combiner 34. Downlink transmission power control signal TPC_DBB used at this time is the demodulated TPC_DM that was inserted into the uplink signal by the mobile station. This is how base station apparatus B performs downlink transmission power control.

If there are no demodulation errors, TPC_DBA and TPC_DBB are the same, and therefore the same amplification factor of the downlink signal is used for base station apparatus A and base station apparatus B, hence the same increment/decrement control is performed. However, since their initial values of amplification factor are not always the same, the absolute values of amplification factor are not always the same.

Mobile station apparatus M demodulates the signal received from antenna 6 via duplexer 5 by demodulator 8 and obtains received data RX_DATA_D via despreader 9 and RAKE combiner 10. Furthermore, mobile station apparatus M estimates the quality of the downlink reception signal by SIR maesurer 11 using the result of RAKE combiner 10 and determines downlink signal transmission power control bit TPC_DM based on this estimated value. Transmission power control of the downlink signal above is performed according to this signal.

RAKE combiner 10 extracts the uplink transmission power control signals inserted into both the downlink signal from base station apparatus A and the uplink signal from base station apparatus B. TPC_UMA is the extracted TPC_UBA that was inserted by base station apparatus A and TPC_UMB is the extracted TPC_UBB that was inserted by base station apparatus B.

Transmission power signals TPC_UBA and TPC_UBB have different values, but the transmission power of the uplink signal is increased only when both TPC_UMA and TPC_UMB have control to increase the transmission power through AND operator 612. Otherwise, mobile station apparatus M determines TPC_UM, an input signal to integrator 607 so that the transmission power of the uplink signal is reduced. This prevents the uplink signal from having excessive transmission power at the time of a soft handover.

As shown above, the conventional transmission/reception system performs transmission power control for both the uplink signal and downlink signal at the time of a soft handover, which suppresses excessive transmission power within a certain range, preventing the system capacity from reducing.

However, in the conventional transmission/reception apparatus above, mobile station apparatus M inserts the same downlink signal transmission power control bit for both base station apparatus A that stays in the handover source area and base station apparatus B that stays in the handover destination area, and thus performs the same transmission power control. That is, although contributions of the reception signal from base station apparatus A and the reception signal from base station apparatus B to a combined reception signal at mobile station apparatus M are different at the beginning and at the end of the handover, both base station apparatus send signals with the same transmission power over the entire handover period. As a result, the transmission power at the beginning and at the end of the handover may constitute interference with other users and suppress the capacity of the communication system.

### Disclosure of Invention

It is an objective of the present invention to provide a transmission power control method and a transmission/reception apparatus capable of improving the system capacity by preventing transmissions with excessive transmission power during a soft handover and reducing total transmission power of the system while maintaining the reception quality at the receiving station.

This objective is achieved by performing first transmission power control according to a transmission power control signal inserted into an uplink signal and second transmission power control, when the distance between the base station and mobile station is great, to reduce the transmission power.

### Brief Description of Drawings

FIG. 1 are outlined block diagrams of a conventional example of CDMA base station apparatus;
FIG.2 is a drawing showing how a handover takes place in the conventional example of CDMA base station apparatus;
FIG.3 is a schematic diagram of reception power of a mobile station of the conventional example of CDMA base station apparatus without transmission power control;
FIG.4 is a schematic diagram of reception power of the mobile station of the conventional example with transmission power control;
FIG.5 is a schematic diagram of transmission power of the base station of the conventional example with transmission power control;
FIG.6 are outlined block diagrams of a CDMA base station apparatus according to Embodiment 1 of the present invention;

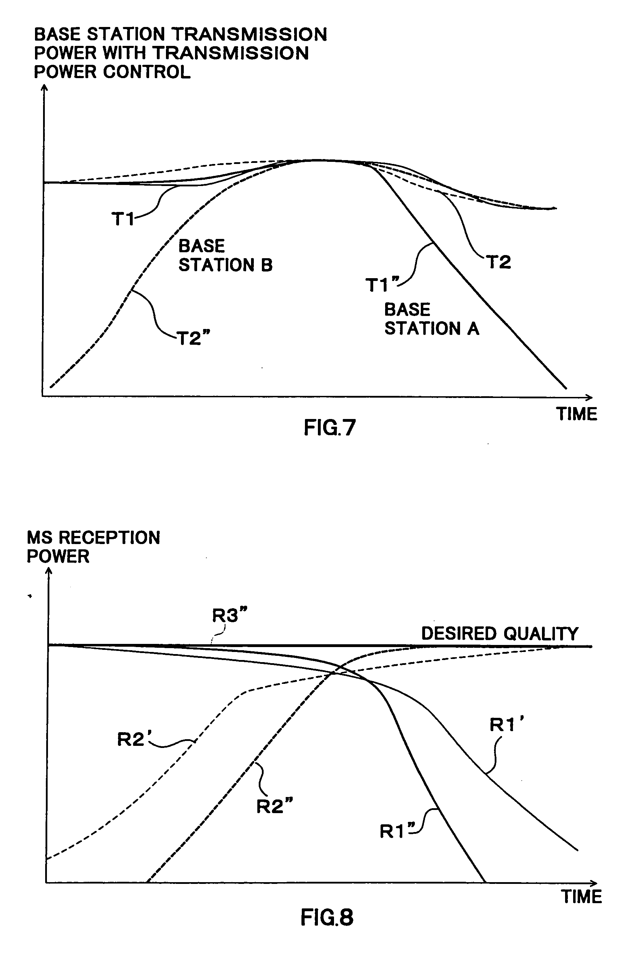

FIG.7 is a schematic diagram of transmission power of the base station apparatus according to Embodiment 1.

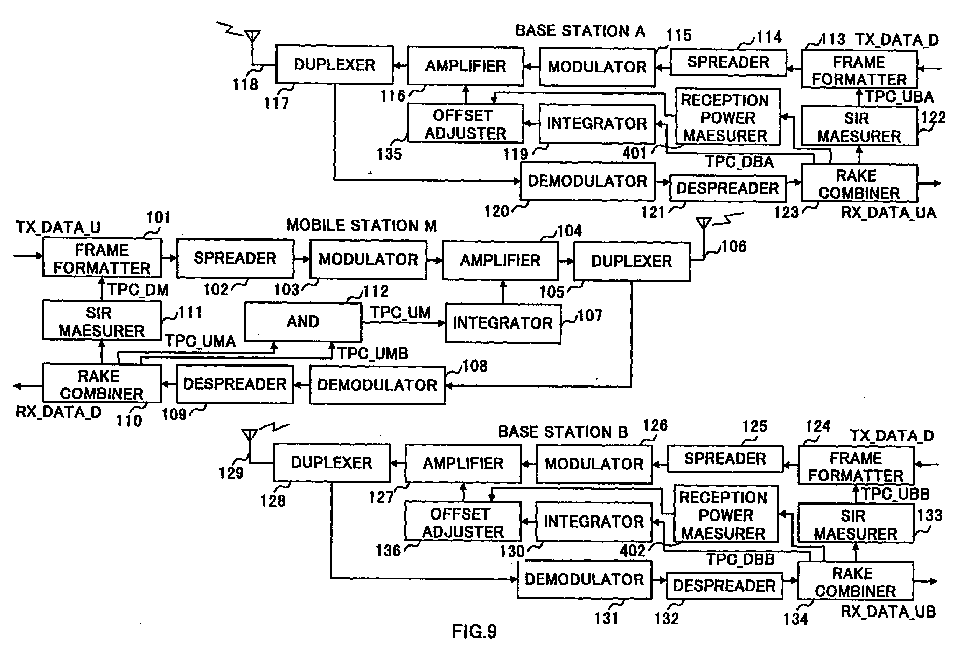

FIG.8 is a schematic diagram of reception power of the mobile station apparatus according to Embodiment 1.
FIG.9 are outlined block diagrams of a CDMA base station apparatus according to Embodiment 2 of the present invention; and

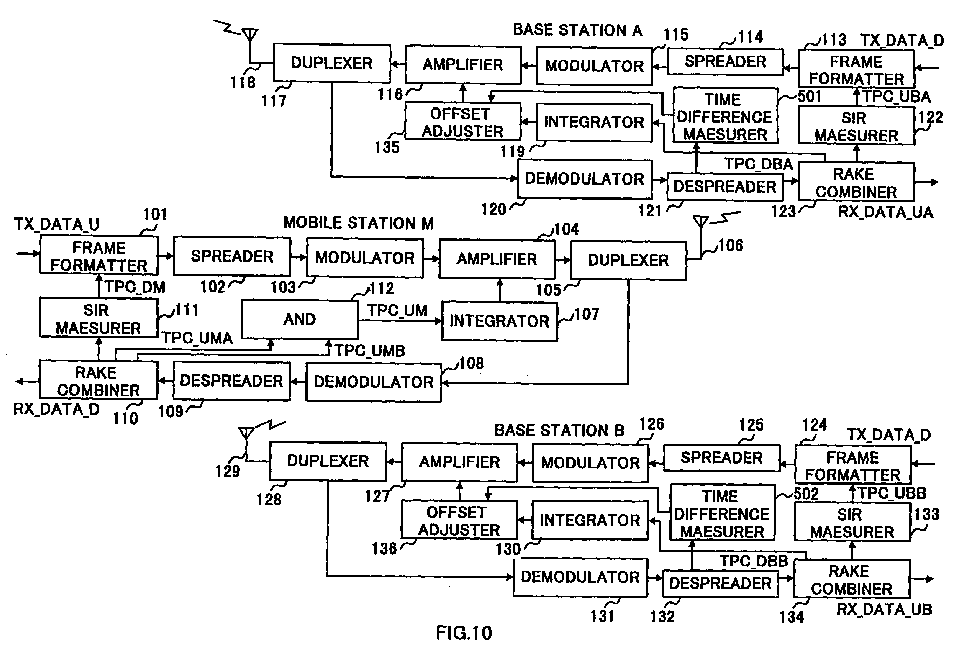

FIG.10 are outlined block diagrams of a CDMA base station apparatus according to Embodiment 3 of the present invention.

### Best Mode for Carrying out the Invention

### (Embodiment 1)

With reference now to the attached drawings, a CDMA base station apparatus according to Embodiment 1 of the present invention is explained below. FIG.6 are block diagrams showing an outlined configuration of a system including a CDMA base station apparatus according to Embodiment 1 of the present invention.

Mobile station apparatus Mcomprises frame formatter 101, spreader 102, modulator 103, amplifier 104, duplexer 105, antenna 106, integrator 107, demodulator 108, despreader 109, RAKE combiner 110, SIR maesurer 111 and AND operator 112.

On the other hand, base station apparatus A comprises frame formatter 113, spreader 114, modulator 115, A amplifier 116, duplexer 117, antenna 118, integrator 119, demodulator 120, despreader 121, SIR maesurer 122 and RAKE combiner 123, and further offset adjuster 135.

Likewise, base station apparatus B comprises frame formatter 124, spreader 125, modulator 121, amplifier 127, duplexer 128, antenna 129, integrator 130, demodulator 131, despreader 132, SIR maesurer 133 and RAKE combiner 134, and further offset adjuster 136.

Offset adjusters 135 and 136 have a function to adjust offset values of the amplification factors of amplifiers 116 and 117. In Embodiment 1, offset adjuster 135 at base station apparatus A controls the amplification factor taking into account both a value obtained by integrator 119 integrating the output from RAKE combiner 123 and the quality of the uplink signal estimated by SIR maesurer 122. Likewise, offset adjuster 136 at base station apparatus B controls the amplification factor taking into account both a value obtained by integrator 130 integrating the output from RAKE combiner 134 and the quality of the uplink signal estimated by SIR maesurer 133.

The transmission power control processing when a handover is carried out by base station apparatuses A and B above is explained in detail with reference to FIG. 7 and FIG.8. FIG.7 is a schematic diagram of the transmission power of the base station apparatus of Embodiment 1 of the present invention and FIG.8 is a drawing showing the reception power level of mobile station apparatus M of Embodiment 1 of the present invention. In Embodiment 1, suppose a soft handover takes places when mobile station apparatus M moves from the area of base station apparatus A to the area of base station apparatus B.

Mobile station apparatus M sends uplink signal TX_DATA_U. First, frame formatter 101 carries out error correction coding on the transmission data, inserts a pilot symbol and inserts downlink signal transmission power control signal TPC_DM determined based on the result of SIR maesurer 111 that estimates the quality of the downlink signal. The output signal of this frame formatter 101 is spread by spreader 102, modulated by modulator 103, amplified by amplifier 104 and transmitted from antenna 106 via duplexer 105. The amplification factor of amplifier 104 is controlled by integrator 107.

Base station apparatus A separates the signal received from antenna 118 by duplexer 117, demodulates by demodulator 120, subjects to signal processing by despreader 121 and RAKE combiner 123 and obtains reception signal RX_DATA_UA. At this time, SIR maesurer 122 estimates the reception quality of the uplink signal using the output of RAKE combiner 123 and determines the transmission power control level of the uplink signal based on estimated value TPC_UBA. The determined transmission power control level is inserted into downlink transmission signal TX_DATA_D as a transmission power control bit by frame formatter 113.

The output signal of frame formatter 113 is spread by spreader 114, modulated by modulator 115, amplified by amplifier 116 and transmitted from antenna 118 via duplexer 117.

The amplification factor of amplifier 116 is controlled by incrementing/decrementing the offset value of offset adjuster 135 to which a value obtained by integrator 119 integrating TPC_DBA which was extracted by RAKE combiner 123, based on the quality of the uplink signal estimated by SIR maesurer 122.

To be more specific, if the quality of the uplink signal is not good, that is, if the output value of SIR maesurer 122 is low, offset adjuster 135 determines that mobile station apparatus M is far from base station apparatus A and reduces the offset value to reduce the transmission power. On the contrary, if the quality of the uplink signal is good, that is, if the output value of SIR maesurer 122 is high, offset adjuster 135 determines that mobile station apparatus M is near base station apparatus A and increases the offset value.

The SIR measured value used for offset adjustment is averaged to a certain degree so that it does not respond to instantaneous variations. Control over instantaneous variations is more effective than using the integration result of integrator 119 to which downlink transmission power control signal TPC_DBA is input. This downlink transmission power control signal TPC_DBA is obtained by demodulating TPC_DM inserted to the uplink signal by the mobile station. That is, drastic transmission power variations can be suppressed by incrementing/decrementing the previous transmission power by 1 dB according to transmission power control signal TPC_DBA. This is how base station A performs downlink transmission power control.

On the other hand, base station apparatus B separates the signal received from antenna 129 by duplexer 128, demodulates by demodulator 131, subjects to signal processing by despreader 132 and RAKE combiner 134 and obtains reception signal RX_DATA_UB. At this time, SIR maesurer 133 estimates the reception quality of the uplink signal using the output of RAKE combiner 134 and determines the transmission power control signal of the uplink signal based on estimated value TPC_UBB. The determined transmission power control signal is inserted into downlink transmission signal TX_DATA_D as a transmission power control bit by frame formatter 124.

As in the case of base station apparatus A, the output signal from the frame formatter is spread by spreader 125, modulated by modulator 126, amplified by amplifier 127 and transmitted from antenna 129 via duplexer 128. The amplification factor of amplifier 127 is controlled, as in the case of base station apparatus A, by RAKE combiner 134, integrator 130 and SIR maesurer 133, etc. An increment/decrement of offset values of offset adjuster 136 of base station apparatus B is also controlled in the same way as for base station apparatus A above.

If there are no demodulation errors, TPC_DBA matches TPC_DBB, and the output of integrator 119 of base station apparatus A would originally match the output of integrator 130 of base station apparatus B. However, the amplification factor of the downlink signal of the amplifier of base station apparatus A and the amplification factor of the downlink signal of the amplifier of base station apparatus B are set to different values by the above control of offset adjusters 135 and 136.

Offset adjusters 135 and 136 above have a configuration in which values of the uplink signal measured by SIR maesurers 122 and 133 or those values converted by a table, etc. and then optimized are added to the outputs of integrators 119 and 130. This allows not only transmission power control common to all base stations using the TPC bit inserted into the uplink signal but also power control specific to each base station apparatus according to its distance from the mobile station apparatus.

The table used for conversion of SIR measurement results are created by obtaining through simulation an optimum conversion function that will minimize the total transmission power of the system.

Furthermore, offset adjusters 135 and 136 can multiply the outputs of integrators 119 and 130 by the results of SIR measurements, etc. instead of adding the results of SIR measurements to the outputs of integrators 119 and 130. Offset adjusters 135 and 136 can also perform some linear processing or non-linear processing on the outputs of integrators 119 and 130 based on the SIR values.

On the other hand, mobile station apparatus M receives the signal whose transmission power has been controlled as shown above from antenna 106, separates by duplexer 105, demodulates by demodulator 108, subjects it to signal processing by despreader 109 and RAKE combiner 110 and obtains reception signal RX_DATA_D. SIR maesurer 111 estimates the quality of the downlink reception signal using the output of RAKE combiner 110 and determines downlink transmission power control signal TPC_DM to be inserted into the uplink signal based on the estimated quality of the downlink reception signal. This is how downlink transmission power control is performed.

Mobile station apparatus M further extracts the uplink transmission power control signal inserted into the downlink signal from the output of RAKE combiner 110. Uplink transmission power control signal TPC_UMA is obtained by extracting control signal TPC_UBA inserted by base station apparatus A from the downlink signal. Uplink transmission power control signal TPC_UMB is obtained by extracting control signal TPC_UBB inserted by base station apparatus B from the downlink signal.

Uplink transmission power control signals TPC_UMA and TPC_UMB received from base station apparatus A and base station apparatus B, respectively have different values. Mobile station apparatus M carries out transmission power control to increase the transmission power of the uplink signal through AND operator 112 only when both control signals TPC_UMA and TPC_UMB have control to increase the transmission power. Otherwise, mobile station apparatus M determines control value TPC_UM so that the transmission power of the uplink signal is decreased. As a result, if mobile station apparatus M is close to either base station apparatus A or base station apparatus B, the transmission power does not increase and the transmission power does increase only when mobile station apparatus M is far from both base station apparatus A and base station apparatus B. Therefore, at the beginning or at the end of soft handover control, transmission power control of the farther base station apparatus becomes dominant, which prevents the uplink signal from the mobile station apparatus from having excessive transmission power.

The transmission power of base station apparatuses A and B with transmission power control above and the reception power of mobile station apparatus M are explained below using FIG.7 and FIG.8.

In FIG.7, transmission power T1 (CPC_TA) and transmission power T2 (CPC_TB) represent transmission powers when base station apparatus A and base station apparatus B carry out transmission power control according to the conventional method. In this case, as explained in FIG. 4, less contribution of the combination by the mobile station apparatus is observed on the right side of transmission power T1 and left side of transmission power T2 despite the great power with which signals were sent.

On the contrary, according to Embodiment 1, base station apparatus A and base station apparatus B carry out transmission power control above using offset adjusters 135 and 136. As a result, as shown in FIG.7, transmission power T1" of base station apparatus A and transmission power T2" of base station apparatus B decrease greatly at either the beginning or the end of a handover. Due to a drop of transmission power of either base station apparatus, the total transmission power of the system as a whole decreases.

FIG.8 shows the reception power of mobile station apparatus M. The reception power of signals received from base station apparatuses A and B with conventional transmission power control is represented by R1' and R2' , respectively.

On the other hand, the reception power of signals received from base station apparatuses A and B with transmission power control according to Embodiment 1 is shown as R1" and R2", respectively.

The reception power combining these signals received from base station apparatuses A and B is shown as R3". As shown in the figure, when mobile station apparatus is far from base station apparatus A, reception power R1" of mobile station apparatus M is almost the same as reception power R1' with conventional control. However, when mobile station apparatus M is close to base station apparatus A, reception power R1" of mobile station apparatus M is by far lower than reception power R1' with conventional control. On the contrary, when mobile station apparatus M is close to base station apparatus B, reception power R2" of mobile station apparatus M is by far lower than reception power R2' with conventional control.

As a result, reception power R3" at the mobile station apparatus has a uniform required quality over the entire period of a handover even if mobile station apparatus M is close to either base station apparatus at the beginning or at the end of the handover.

As shown above, each base station apparatus according to Embodiment 1 performs downlink signal transmission power control independently of each other, and therefore the reception power of the mobile station apparatus does not increase beyond the desired quality in the vicinity of the base station apparatuses. Moreover, the total transmission power of the system decreases, whereas the system capacity and transmission quality increase.

### (Embodiment 2)

A CDMA base station apparatus according to Embodiment 2 of the present invention is explained below with reference to the attached drawings. FIG. 9 are block diagrams showing an outlined configuration of a system including a CDMA base station apparatus according to Embodiment 2 of the present invention.

The configuration of the CDMA base station apparatus according to Embodiment 2 is basically the same as that of the transmission/reception apparatus in Embodiment 1, and therefore the same components are assigned the same numbers and their explanations are omitted.

The difference from Embodiment 1 is that base station apparatuses A and B are provided with reception power maesurers 401 and 402, respectively. The transmission/reception apparatus according to Embodiment 2 carries out measurements of the level of reception signals from a mobile station apparatus at the base station apparatuses not by SIR maesurers but by reception power maesurers 401 and 402. Reception power maesurers 401 and 402 adjust the level of offset values of offset adjusters 135 and 136 according to these measurement results.

That is, the amplification factor of downlink transmission signal TX_DATA_D is controlled by a value obtained by integrators 119 and 130 integrating transmission power control signal TPC_DBA which was extracted by RAKE combiners 123 and 134 and the reception power values of the uplink signal measured by reception power maesurers 401 and 402.

If the reception power of the uplink signal measured by reception power maesurers 401 and 402 is small, mobile station M is judged to be far form base station A. In this case, base station apparatuses A and B reduce the offset values of offset adjusters 135 and 136 to reduce the amplification factor of amplifier 116, reducing the transmission power. On the contrary, if the reception power is large, mobile station apparatus M is judged to be near base station A and base station apparatuses A and B increase the offset values to increase the transmission power.

The reception power measured values used for offset adjustment are averaged to a certain degree so that they do not respond to instantaneous variations. As in the case of Embodiment 1, control over instantaneous variations can be performed by suppressing drastic variations of the transmission power by incrementing/decrementing the previous transmission power by 1 dB according to transmission power control signal TPC_DBA received.

As shown above, according to Embodiment 2, the base station apparatuses can perform more accurate downlink transmission power control through control by the transmission power control signal received and offset control based on the reception power values measured by reception power maesurers 401 and 402.

### (Embodiment 3)

A CDMA base station apparatus according to Embodiment 3 of the present invention is explained below with reference to the attached drawings. FIG.10 are block diagrams showing an outlined configuration of a system including a CDMA base station apparatus according to Embodiment 3 of the present invention.

The configuration of the CDMA base station apparatus according to Embodiment 3 is basically the same as that of the transmission/reception apparatus in Embodiment 1, and therefore the same components are assigned the same numbers and their explanations are omitted.

The difference from Embodiment 1 is that base station apparatuses A and B are provided with time difference maesurers 501 and 502, respectively. The transmission/reception apparatus according to Embodiment 3 carries out measurements of the level of reception signals from a mobile station apparatus at base station apparatuses not by SIR maesurers but by time difference maesurers 501 and 502. Time difference maesurers 501 and 502 adjust the level of offset values of offset adjusters 135 and 136 according to the measurement results.

That is, the amplification factor of downlink transmission signal TX_DATA_D is controlled by both a value obtained by integrators 119 and 130 integrating transmission power control signal TPC_DBA which was extracted by RAKE combiners 123 and 134 and the time difference between the downlink signal transmission timing and the uplink signal reception timing measured by time difference maesurers 501 and 502.

If the time difference measured by time difference maesurers 501 and 502 is large, mobile station apparatus M is judged to be far form base station A. In this case, base station apparatuses A and B reduce the offset values of offset adjusters 135 and 136 to reduce the amplification factor of amplifier 116, reducing the transmission power. On the contrary, if the time difference is small, mobile station apparatus M is judged to be near base station A and base station apparatuses A and B increase the offset values to increase the transmission power. The time difference measured values used for offset adjustment are averaged to a certain degree so that they do not respond to instantaneous variations.

As shown above, according to Embodiment 3, the base station apparatuses can perform more accurate downlink transmission power control through control by the transmission power control signal received and offset control based on the time difference between the transmission and receptions signals measured by time difference maesurers 501 and 502.

According to the present invention, the reception power of the mobile station apparatus does not increase beyond the desired quality in the vicinity of the base station apparatuses, preventing signals from being transmitted with excessive transmission power during a soft handover. Moreover, the total transmission power of the system decreases, whereas the system capacity and transmission quality increase.

This application is based on the Japanese Patent Application No.HEI 10-078315 filed on March 10, 1998, entire content of which is expressly incorporated by reference herein.

### Industrial Applicability

The present invention is applicable to a digital radio communication system using CDMA. Since it prevents excessive quality for both mobile station and base station apparatuses, the present invention is ideal when a soft handover takes place.

## Claims

1. A radio communication system comprising:
a first base station (BASE STATION A) from which a soft handover starts;
a second base station (BASE STATION B) at which the soft handover ends; and
a mobile station (M) that combines a signal (R1) from the first base station (BASE STATION A) and a signal (R2) from the second base station (BASE STATION B) during the soft handover from the first base station (BASE STATION A) to the second base station (BASE STATION B),
**characterised in that**
the first base station (BASE STATION A) and the second base station (BASE STATION B) control power levels of the signals transmitted to the mobile station (M) in accordance with a time difference between a transmission timing of a downlink signal and a reception timing of an uplink signal such that the first base station (BASE STATION A) gradually reduces power levels of signals (T1") transmitted to the mobile station (M) as the time difference increases, and the second base station (BASE STATION B) gradually increases power levels of signals (T2") transmitted to the mobile station (M) as the time difference decreases, to keep the combined signal (R3") obtained in the mobile station (M) at a desired quality level.
